# EUROPÄISCHE PATENTANMELDUNG

(11) **EP 3 878 326 A1**
(43) Veröffentlichungstag der Anmeldung: **15.09.2021**
(21) Anmeldenummer: 21158217.6
(22) Anmeldetag: 19.02.2021
(51) Int. Cl.: A47J 31/52, A47J 31/60

(54) **VERFAHREN ZUM BESTIMMEN EINES FRISCHE-ZUSTANDS VON MILCH**

(30) Priorität: 13.03.2020 DE 102020203263
(71) Anmelder: BSH Hausgeräte GmbH, 81739 München (DE)
(72) Erfinder: Langwieder, Matthias, 83349 Palling (DE); Neustifter, Johannes, 83071 Stephanskirchen (DE); Schaufler, Stephan, 83334 Inzell (DE); Schopf, Florian, 83308 Trostberg (DE); Singhartinger, Christian, 83229 Aschau (DE)

(57) **Zusammenfassung**

Die Erfindung betrifft ein Verfahren zum Bestimmen eines Frische-Zustands von Milch (2), Gemäß dem Verfahren wird die elektrische Leitfähigkeit und/oder der pH-Wert der Milch (2) ermittelt und anschließend der Frische-Zustands der Milch (2) in Abhängigkeit von der ermittelten elektrischen Leitfähigkeit bzw. dem ermittelten pH-Wert bestimmt.

## Beschreibung

Die Erfindung betrifft ein Verfahren zum Bestimmen eines Frische-Zustands von Milch. Die Erfindung betrifft ferner eine Messvorrichtung zum Bestimmen eines Frische-Zustands von Milch, welche zur Durchführung eines solchen Verfahrens ausgebildet ist.

Kaffeemaschinen benötigen zur Zubereitung von Milchgetränken wie Cappuccino oder Latte Macchiato die Zuführung von Milch. Dies erfolgt üblicherweise aus einer Milchtüte über einen Milchschlauch oder aus einem im Kaffeevollautomaten integrierbaren Milchtank. Alternativ kann Milch auch in einem Behältnis zum Aufnehmen von Milch bereitgestellt werden, welches in einem Kühlschrank angeordnet ist. Eine Verschlechterung eines Frische-Zustands, insbesondere eine Versäuerung, der Milch kann jedoch zu gesundheitlichen Problemen bei einem Konsumenten der Milch oder einem Benutzer einer Kaffeemaschine, welcher ein mit einer solchen sauren Milch zubereitetes Milchgetränk konsumiert, führen.

Es ist daher eine Aufgabe der vorliegenden Erfindung, ein - zumindest alternatives oder verbessertes - Verfahren zum Bestimmen eines Frische-Zustands von Milch zu schaffen, bei welchem die oben beschriebenen Nachteile zumindest teilweise, idealerweise vollständig, ausgeräumt sind. Außerdem soll eine Messvorrichtung geschaffen werden, welche eine Bestimmung des Frische-Zustands von Milch ermöglicht.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Grundidee der Erfindung ist demnach, eine Verschlechterung, insbesondere eine Versäuerung, von Milch über eine Änderung deren elektrischer Leitfähigkeit - dem Fachmann auch als "Leitwert" bekannt - oder über eine Änderung des pH-Werts der Milch zu bestimmen. Insbesondere kann entsprechend einer Abweichung einer ermittelten elektrischen Leitfähigkeit bzw. eines ermittelten pH-Werts von einem Referenzwert ein Frische-Zustand der Milch eingestuft werden. Auf diese Weise kann eine Zubereitung eines Milchgetränks mit einer nicht mehr frischen, also "schlecht gewordenen Milch" oder mittels entsprechend kontaminierter milchführender Komponenten vermieden werden.

Ein erfindungsgemäßes Verfahren dient zum Bestimmen eines Frische-Zustands von Milch. Gemäß dem Verfahren wird die elektrische Leitfähigkeit und, alternativ oder zusätzlich, der pH-Wert der Milch ermittelt. Anschließend wird der Frische-Zustand der Milch in Abhängigkeit von der ermittelten elektrischen Leitfähigkeit bzw. dem ermittelten pH-Wert bestimmt.

Bevorzugt wird der Frische-Zustand der Milch mittels Abgleich der ermittelten elektrischen Leitfähigkeit bzw. des ermittelten pH-Werts mit einem jeweiligen Referenzwert bestimmt. Dies ermöglicht eine besonders einfache und eindeutige Ermittlung des Frische-Zustands der Milch.

Gemäß einer vorteilhaften Weiterbildung des Verfahrens wird vor Durchführung von Maßnahme a) der jeweilige Referenzwert durch Bestimmung der elektrischen Leitfähigkeit bzw. des pH-Werts von frischer Milch festgelegt. Auf diese Weise kann vor der Ermittlung der elektrischen Leitfähigkeit bzw. des pH-Werts zur Bestimmung des Frische-Zustands, ein von einer frischen Milch stammender Referenzwert bestimmt werden.

Gemäß einer alternativen vorteilhaften Weiterbildung ist der jeweilige Referenzwert vorbestimmt und in einem Datenspeicher hinterlegt. Somit kann eine zur Bestimmung des Frische-Zustands ermittelte elektrische Leitfähigkeit bzw. ein ermittelter pH-Wert der Milch mit einem empirisch einer frischen Milch entsprechenden Referenzwert abgeglichen werden, ohne dass eine zusätzliche Messung nötig ist.

Gemäß einer bevorzugten Ausführungsform wird der Frische-Zustand der Milch als nicht frisch eingestuft, falls eine prozentuale Abweichung der ermittelten elektrischen Leitfähigkeit bzw. des ermittelten pH-Werts von dem jeweiligen Referenzwert über einem vorbestimmten Schwellwert liegt. Dies ermöglicht eine besonders präzise und einfache Einstufung der Frische der Milch.

Gemäß einer weiteren bevorzugten Ausführungsform wird die elektrische Leitfähigkeit und, alternativ oder zusätzlich, der pH-Wert der Milch mittels einer oder mehrerer der folgenden Maßnahmen ermittelt:
- Mittels einer kapazitiven Messung in der Milch;
- Mittels einer induktiven Messung in der Milch;
- Mittels einer Messung eines elektrischen Widerstands in der Milch;
- Mittels einer Messung mit einer pH-Elektrode, insbesondere mit einem ISFET.
Auch auf diese Weise wird eine besonders präzise und einfache Einstufung der Frische der Milch ermöglicht.

Vorteilhaft wird nach Bestimmen des Frische-Zustands der Milch ein Benutzer über diesen bestimmten Frische-Zustand der Milch informiert. Somit kann dieser Benutzer vor einer Verwendung einer sauren Milch gewarnt werden.

Gemäß einer vorteilhaften Weiterbildung wird die elektrische Leitfähigkeit und, alternativ oder zusätzlich, der pH-Wert der Milch über einen Parameter ermittelt, der in einem Behältnis zum Aufnehmen von Milch einer Messvorrichtung zum Bestimmen eines Frische-Zustands der Milch gemessenen wird. Auf diese Weise kann ein Frische-Zustand von Milch vor einer Verwendung zum Zubereiten eines Milchgetränks bestimmt werden.

Gemäß einer weiteren vorteilhaften Weiterbildung wird die elektrische Leitfähigkeit und, alternativ oder zusätzlich, der pH-Wert der Milch gemäß einer oder mehrerer der folgenden Maßnahmen ermittelt:
- Über einen in einem Milchschlauch einer Kaffeemaschine zum Einleiten von Milch in die Kaffeemaschine gemessenen Parameter;
- Über einen in milchführenden Komponenten der Kaffeemaschine zum Führen von Milch innerhalb der Kaffeemaschine gemessenen Parameter ermittelt wird.
Auch auf diese Weise kann ein Frische-Zustand von Milch vor einer Verwendung zum Zubereiten eines Milchgetränks bestimmt werden.

Vorteilhaft wird in Abhängigkeit von einer Abweichung der ermittelten elektrischen Leitfähigkeit bzw. des ermittelten pH-Werts von dem jeweiligen Referenzwert ein zu einer Verwendung der Milch zum Zubereiten eines Milchgetränks gehöriger Brühvorgang, insbesondere eine Brühtemperatur und/oder ein Brühdauer betreffend, angepasst.

Die Erfindung betrifft ferner eine Messvorrichtung zum Bestimmen eines Frische-Zustands von Milch mit wenigstens einer Sensoreinrichtung zum Messen eines von der elektrischen Leitfähigkeit der Milch und, alternativ oder zusätzlich, von dem pH-Wert der Milch abhängigen Parameters. Die Messvorrichtung umfasst außerdem eine Steuerungs-/Regelungseinrichtung, welche zum Ermitteln der elektrischen Leitfähigkeit der Milch und, alternativ oder zusätzlich, des pH-Werts der Milch über den jeweiligen gemessenen Parameter mit der wenigstens einen Sensoreinrichtung zusammenwirkt und zur Durchführung des erfindungsgemäßen Verfahrens eingerichtet/programmiert ist. Die vorangehend erläuterten Vorteile des erfindungsgemäßen Verfahrens übertragen sich somit auch auf die erfindungsgemäße Messvorrichtung.

Vorteilhaft umfasst die wenigstens eine Sensoreinrichtung der Messvorrichtung einen oder mehrere der folgenden Sensoren:
- ein kapazitives Sensorelement zum Messen einer Kapazität in der Milch als Parameter;
- ein induktives Sensorelement zum Messen einer Induktivität in der Milch als Parameter;
- ein als Lastwiderstand ausgebildetes Sensorelement zum Messen eines elektrischen Widerstands in der Milch als Parameter;
- ein als pH-Elektrode, insbesondere als ISFET, ausgebildetes Sensorelement zum Messen einer Spannung oder eines Stroms als Parameter.
Auf diese Weise wird eine besonders präzise und einfache Einstufung der Frische der Milch ermöglicht sowie eine besonders kostengünstige und kompakte Ausführungsform der Messvorrichtung realisiert.

Gemäß einer bevorzugten Ausführungsform wird, falls im Betrieb der Messvorrichtung die Milch als nicht frisch eingestuft wird, eine Verwendung der Milch durch die Messvorrichtung abgebrochen oder verhindert und, alternativ oder zusätzlich, einem Benutzer die Durchführung eines Programms zum Spülen von milchführenden Komponenten der Messvorrichtung vorgeschlagen. Mittels dieser Ausführungsform lässt sich eine Zubereitung eines Milchgetränks mit saurer Milch sowie eine Kontamination der milchführenden Komponenten mit einer solchen Milch vermeiden bzw. eine bereits eingetreten Kontamination wieder einfach beheben.

Gemäß einer vorteilhaften Ausführungsform ist die Messvorrichtung als Kaffeemaschine mit einem Behältnis zum Aufnehmen von Milch ausgebildet. Dabei ist die wenigstens eine Sensoreinrichtung zum Messen des Parameters in einem Milchschlauch der Kaffeemaschine zum Einleiten von Milch in die Kaffeemaschine angeordnet. Alternativ oder zusätzlich ist die wenigstens eine Sensoreinrichtung in einem Behältnis der Kaffeemaschine zum Aufnehmen von Milch angeordnet. Alternativ oder zusätzlich ist die wenigstens eine Sensoreinrichtung in milchführenden Komponenten der Kaffeemaschine zum Führen von Milch innerhalb der Kaffeemaschine angeordnet. Mittels dieser Weiterbildung kann eine saure Milch bereits vor einer Verwendung in den milchführenden Komponenten erkannt und somit diese Verwendung vermieden bzw. eine bereits eingetretene Kontaminierung der milchführenden Komponenten erkannt werden.

Gemäß einer weiteren vorteilhaften Ausführungsform ist die Messvorrichtung als Kühlschrank mit einem Behältnis zum Aufnehmen von Milch ausgebildet. Dabei ist die wenigstens eine Sensoreinrichtung zum Messen des Parameters in einem Behältnis des Kühlschranks angeordnet ist. Mittels dieser Weiterbildung kann eine saure Milch bereits vor einer Verwendung in dem Behältnis fluidisch nachgeschalteten milchführenden Komponenten erkannt und somit diese Verwendung vermieden bzw. eine bereits eingetretene Kontaminierung der fluidisch nachgeschalteten milchführenden Komponenten erkannt werden.

Vorteilhaft weist die Messvorrichtung eine mit der Steuerungs-/Regelungseinrichtung zusammenwirkende, bevorzugt zur drahtlosen Datenübertragung ausgebildete, noch bevorzugter zur drahtlosen Datenübertragung via Induktion, Bluetooth oder NFC ausgebildete, Schnittstelle zum Auslesen des Frische-Zustands, des pH-Werts oder auch der elektrischen Leifähigkeit der Milch auf.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

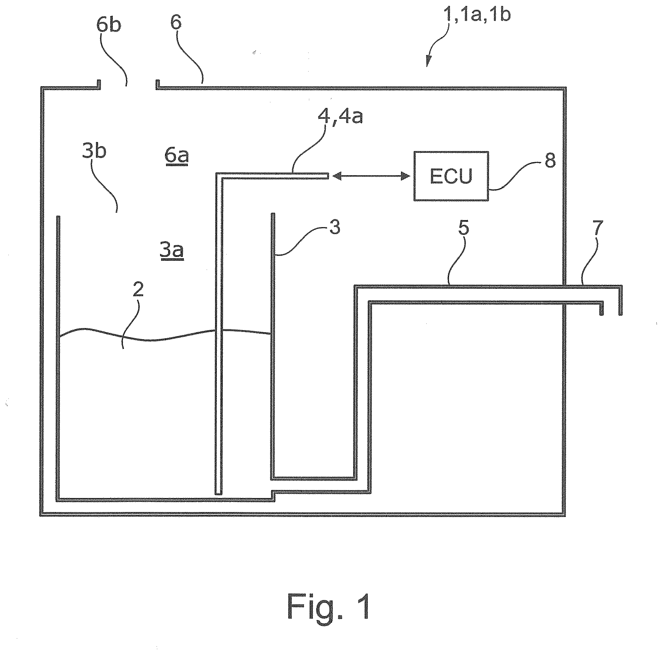

Die einzige Figur 1 illustriert ein Beispiel einer als Kaffeemaschine 1a ausgebildeten erfindungsgemäßen Messvorrichtung 1, welche zur Durchführung des erfindungsgemäßen Verfahrens eingerichtet ist. Die Kaffeemaschine 1a ist mit einem Gehäuse 6 ausgestattet, welches einen Gehäuseinnenraum 6a umgibt. Im Gehäuseinnenraum 6a ist ein als Milchtank ausgebildetes Behältnis 3 angeordnet, welches einen Behältnisinnenraum 3a zum Fassen von Milch 2 begrenzt. Das Gehäuse 3 weist außerdem eine Gehäuseöffnung 6b auf, über welche Milch 2 in einen Behältnisinnenraum 3a des Behältnisses 3 eingebracht werden kann.

In der Kaffeemaschine 1a sind darüber hinaus milchführende Komponenten 5, insbesondere interne milchführende Leitungen, zum Führen von Milch 2 innerhalb der Kaffeemaschine 1 vorgesehen. Diese Komponenten 5 sind derart angeordnet, dass über sie Fluidpfade vom Behältnisinnenraum 3a zu einem Auslass 7 zum Ausleiten eines mit der Kaffeemaschine 1a zubereiteten Getränks führen. Im Beispiel der Figur 1 ist die Kaffeemaschine 1a zudem derart ausgebildet, dass ein Pflege- oder auch Reinigungsmittel zum Spülen oder Reinigen der milchführenden Komponenten 5 durch diese geführt werden kann. Die weiteren Funktionen und der tiefergehende konstruktive Aufbau des Behältnisses 3, der milchführenden Komponenten 5 und des Auslasses 7 sind nicht Kern der hier vorgestellten Erfindung und dem einschlägigen Fachmann bekannt, so dass im Folgenden auf eine detailliertere Erläuterung diesbezüglich verzichtet wird.

Wie im Beispiel der Figur 1 dargestellt, ist im Behältnisinnenraum 3a Milch 2 aufgenommen. Außerdem umfasst die Kaffeemaschine 1a eine Sensoreinrichtung 4 zum Messen eines von der elektrischen Leitfähigkeit der Milch 2 abhängigen Parameters. Alternativ oder zusätzlich kann die Sensoreinrichtung 4 zum Messen eines von dem pH-Wert der Milch 2 abhängigen Parameters ausgebildet sein.

Die Sensoreinrichtung 4 umfasst ein Sensorelement 4a zum Messen des vorangehend genannten Parameters. Das Sensorelement 4a ist derart an oder in der Kaffeemaschine 1a angeordnet, dass er mit der Milch 2 benetzbar ist. Im Beispiel der Figur 1 ist das Sensorelement 4a als kapazitives Sensorelement ausgebildet. Denkbar ist ebenso, dass die Sensoreinrichtung 4 ein induktives Sensorelement zum Messen einer Induktivität in der Milch als Parameter oder ein als Lastwiderstand Sensorelement zum Messen eines elektrischen Widerstands in der Milch als Parameter umfasst. Denkbar ist auch, dass die Sensoreinrichtung 4 ein als pH-Elektrode, insbesondere als ISFET oder als pH-Gas-Elektrode, ausgebildetes Sensorelement zum Messen einer Spannung oder eines Stroms als Parameter umfasst.

Die Sensoreinrichtung 4 und das Sensorelement 4a sind zum Messen des Parameters in dem Behältnisinnenraum 3a des als Milchtank ausgebildeten Behältnisses 3 angeordnet. In alternativen Beispielen der erfindungsgemäßen Kaffeemaschine 1a können die Sensoreinrichtung 4 und das Sensorelement 4a stattdessen oder zusätzlich in einem Milchschlauch (in der Figur 1 nicht gezeigt) der Kaffeemaschine 1 zum Einleiten von Milch in die Kaffeemaschine 1a oder auch in den milchführenden Komponenten 5 angeordnet sein.

Die Kaffeemaschine 1a umfasst außerdem eine Steuerungs-/Regelungseinrichtung 8 zum Ermitteln der elektrischen Leitfähigkeit der Milch 2 bzw. des pH-Werts der Milch 2 mittels des gemessenen Parameters. Dazu wirkt die Steuerungs-/Regelungseinrichtung 8 mit der Sensoreinrichtung 4 zusammen. Außerdem ist die Steuerungs-/Regelungseinrichtung 8 zur Durchführung des erfindungsgemäßen Verfahrens eingerichtet/programmiert.

Die Kaffeemaschine 1a kann außerdem eine mit der Steuerungs-/Regelungseinrichtung 8 zusammenwirkende, bevorzugt zur drahtlosen Datenübertragung ausgebildete, noch bevorzugter zur drahtlosen Datenübertragung via Induktion, Bluetooth oder NFC ausgebildete, Schnittstelle (in Figur 1 nicht gezeigt) zum Auslesen des Frische-Zustands, des pH-Werts oder auch der elektrischen Leifähigkeit der Milch 2 aufweisen.

Alternativ dient Figur 1 ebenso zur Illustration eines Beispiels einer als Kühlschrank 1b ausgebildeten erfindungsgemäßen Messvorrichtung 1, wobei vorangehend vorgestellte Erläuterungen zur Kaffeemaschine 1a mutatis mutandis für den Kühlschrank 1b gelten. Anstelle des Auslasses 7 ist in diesem Falle als ein Verbindungsabschnitt des Kühlschranks 1b zum Ausleiten von Milch 2, insbesondere in eine Kaffeemaschine, zu sehen. Der Verbindungsabschnitt ist dabei über milchführende Komponenten des Kühlschranks 1b mit einem Behältnis des Kühlschranks 1b zum Aufnehmen von Milch 2 fluidisch verbunden, welches in einem Kühlschrankinnenraum zum Kühlen verbaut ist.

Denkbar ist auch eine als Handgerät ausgebildete Messvorrichtung 1.

Im Folgenden wird das erfindungsgemäße Verfahren beispielhaft anhand der Figur 1 erläutert.

Zur Durchführung des Verfahrens wird im Behältnisinnenraum 3a über die Gehäuseöffnung 6b des Gehäuses 6 und über eine Behältnisöffnung 3b des Behältnisses 3 oder durch Bewegen des Behältnisses 3 aus dem Gehäuse 3 heraus Milch 2 im Behältnisinnenraum 3a bereitgestellt.

Anschließend wird - insbesondere, wenn vor Zubereitung eines Milchgetränks mit der Kaffeemaschine 1a ein Frische-Zustand der Milch 2 überprüft werden soll - mittels des kapazitiven Sensorelements 4a eine von der elektrischen Leitfähigkeit der Milch 2 abhängige Kapazität in der im Behältnisinnenraum 3a bereitgestellten Milch 2 gemessen. Beispielsweise kann das Sensorelement 4a einen Kondensator umfassen, in welchem die Milch 2 als Dielektrikum wirkt. Denkbar ist ebenso eine Messung der Kapazität in dem Milchschlauch der Kaffeemaschine 1a oder in den milchführenden Komponenten 5.

Anstelle der Kapazität, kann auch ein anderer von der elektrischen Leitfähigkeit der Milch 2 abhängiger Parameter gemessen werden, wie beispielsweise ein elektrischer Widerstand mittels eines Lastwiderstands als Sensor, eine Induktivität mittels eines induktiven Sensors, oder eine Spannung oder ein Strom mittels eines ISFETs (ionensensitiver Feldeffekt-Transistor) als Sensor.

Über die gemessene Kapazität wird anschließend mit Hilfe der Steuerungs-/Regelungseinrichtung 8 die mit ihr zusammenhängende elektrische Leitfähigkeit der Milch 2 ermittelt. Eine analoge Vorgehensweise gilt für den Fall, dass der pH-Wert der Milch 2 ermittelt wird, wobei besagter dem Fachmann bekannter Zusammenhang über eine lonenkonzentration, insbesondere einen Wasserstoffionenkonzentration, in der Milch gegeben ist.

Die ermittelte elektrische Leitfähigkeit der Milch 2 wird dann mit einem Referenzwert abgeglichen. Der jeweilige Referenzwert kann dabei vor Durchführung von Maßnahme a) durch Bestimmung der elektrischen Leitfähigkeit bzw. des pH-Werts von frischer Milch festgelegt werden. Denkbar ist aber auch, dass der Referenzwert empirisch vorbestimmt wird und in einem mit der Steuerungs-/Regelungseinrichtung 8 zusammenwirkenden Datenspeicher (in Figur 1 nicht gezeigt) hinterlegt ist. Der Datenspeicher ist dabei in der Kaffeemaschine 1 verbaut oder aber an einem von der Kaffeemaschine 1 entfernten Ort, beispielsweise bei einem Hersteller der Milch, welcher den Referenzwert hinterlegt, lokalisiert. Beispielsweise kann ein experimentell bestimmter und bekannter Wert für die elektrische Leitfähigkeit, welcher frischer Milch entspricht, als Referenzwert hinterlegt sein.

Falls eine prozentuale Abweichung der ermittelten elektrischen Leitfähigkeit von dem Referenzwert über einem vorbestimmten Schwellwert liegt, welcher mit saurer Milch - insbesondere mit einer Milch mit einem pH-Wert von 4,5 - korrespondiert, wird der Frische-Zustand der Milch 2 mit Hilfe der Steuerungs-/Regelungseinrichtung 8 als nicht frisch eingestuft. Andernfalls wird die Milch 2 als frisch eingestuft.

Nach einer solchen Bestimmung des Frische-Zustands der Milch 2 wird ein Benutzer über den Frische-Zustand der Milch 2 - beispielsweise mittels einer geeigneten, an der Kaffeemaschine 1a vorgesehenen optischen Anzeige (in Figur 1 nicht gezeigt) oder über eine mit der Kaffeemaschine 1 zusammenwirkenden Smart-Home-Anwendungssoftware, insbesondere mobile Smart-Home-Anwendungssoftware, informiert. Außerdem wird eine Verwendung der Milch 2 durch die Kaffeemaschine 1a abgebrochen oder verhindert, falls die Milch 2 als nicht frisch eingestuft wird. In diesem Falle kann dem Benutzer zudem die Durchführung eines Reinigungsprogramms zum Spülen oder Reinigen der milchführenden Komponenten 5 vorgeschlagen, um diese von der nicht-frischen Milch zu reinigen. Das Behältnis 3 kann dabei vom Benutzer entleert werden oder ebenfalls mittels des vorangehend genannten Reinigungsprogramms gespült bzw. gereinigt werden.

Falls die Milch als frisch eingestuft wird, wird in Abhängigkeit von einer Abweichung der ermittelten elektrischen Leitfähigkeit bzw. des ermittelten pH-Werts von dem jeweiligen Referenzwert ein zu einer Verwendung der Milch 2 zum Zubereiten eines Milchgetränks gehöriger Brühvorgang eine Brühtemperatur oder auch eine Brühdauer betreffend angepasst.

### Bezugszeichenliste

- 1: Messvorrichtung
- 1a: Kaffeemaschine
- 1b: Kühlschrank
- 2: Milch
- 3: Behältnis
- 3a: Behältnisinnenraum
- 3b: Behältnisöffnung
- 4: Sensoreinrichtung
- 4a: Sensorelement
- 5: Milchführende Komponenten
- 6: Gehäuse
- 6a: Gehäuseinnenraum
- 6b: Gehäuseöffnung
- 7: Auslass
- 8: Steuerungs-/Regelungseinrichtung

## Patentansprüche

1. Verfahren zum Bestimmen eines Frische-Zustands von Milch (2), umfassend die folgenden Maßnahmen:
a) Ermitteln der elektrischen Leitfähigkeit und/oder des pH-Werts der Milch (2);
b) Bestimmen des Frische-Zustands der Milch (2) in Abhängigkeit von der in Maßnahme a) ermittelten elektrischen Leitfähigkeit bzw. dem ermittelten pH-Wert.

2. Verfahren nach Anspruch 1,
**dadurch gekennzeichnet, dass**
in Maßnahme b) der Frische-Zustand der Milch (2) mittels Abgleichen der in Maßnahme a) ermittelten elektrischen Leitfähigkeit bzw. des ermittelten pH-Werts mit einem jeweiligen Referenzwert bestimmt wird.

3. Verfahren nach Anspruch 2,
**dadurch gekennzeichnet, dass**
vor Durchführung von Maßnahme a) der jeweilige Referenzwert durch Bestimmung der elektrischen Leitfähigkeit bzw. des pH-Werts von frischer Milch festgelegt wird; oder/und dass
- der jeweilige Referenzwert vorbestimmt und in einem Datenspeicher hinterlegt ist.

4. Verfahren nach Anspruch 2 oder 3,
**dadurch gekennzeichnet, dass**
in Maßnahme b) der Frische-Zustand der Milch (2) als "nicht frisch" eingestuft wird, falls eine prozentuale Abweichung der in Maßnahme a) ermittelten elektrischen Leitfähigkeit bzw. des ermittelten pH-Werts von dem jeweiligen Referenzwert über einem vorbestimmten Schwellwert liegt.

5. Verfahren nach einem der vorhergehenden Ansprüche,
**dadurch gekennzeichnet, dass**
- in Maßnahme a) die elektrische Leitfähigkeit und/oder der pH-Wert mittels einer kapazitiven Messung in der Milch (2) ermittelt wird, und/oder, dass
- in Maßnahme a) die elektrische Leitfähigkeit und/oder der pH-Wert mittels einer induktiven Messung in der Milch (2) ermittelt wird, und/oder, dass
- in Maßnahme a) die elektrische Leitfähigkeit und/oder der pH-Wert mittels einer Messung eines elektrischen Widerstands in der Milch (2) ermittelt wird, und/oder, dass
- in Maßnahme a) die elektrische Leitfähigkeit und/oder der pH-Wert mittels einer Messung mit einer pH-Elektrode, insbesondere mit einem ISFET, ermittelt wird.

6. Verfahren nach einem der vorhergehenden Ansprüche,
**dadurch gekennzeichnet, dass**
nach Bestimmen des Frische-Zustands der Milch (2) in Maßnahme b) ein Benutzer über diesen bestimmten Frische-Zustand der Milch (2) informiert wird.

7. Verfahren nach einem der vorhergehenden Ansprüche,
**dadurch gekennzeichnet, dass**
- in Maßnahme a) die elektrische Leitfähigkeit und/oder der pH-Wert über einen in einem Behältnis (3) zum Aufnehmen von Milch (2) einer Messvorrichtung (1) zum Bestimmen eines Frische-Zustands der Milch (2) gemessenen Parameter ermittelt wird.

8. Verfahren nach einem der vorhergehenden Ansprüche,
**dadurch gekennzeichnet, dass**
- in Maßnahme a) die elektrische Leitfähigkeit und/oder der pH-Wert über einen in einem Milchschlauch einer Kaffeemaschine (1a) zum Einleiten von Milch (2) in die Kaffeemaschine (1a) gemessenen Parameter ermittelt wird, und/oder, dass
- in Maßnahme a) die elektrische Leitfähigkeit und/oder der pH-Wert über einen in milchführenden Komponenten (5) der Kaffeemaschine (1a) zum Führen von Milch (2) innerhalb der Kaffeemaschine (1a) gemessenen Parameter ermittelt wird.

9. Verfahren nach einem der vorhergehenden Ansprüche,
**dadurch gekennzeichnet, dass**
in Abhängigkeit von einer Abweichung der in Maßnahme a) ermittelten elektrischen Leitfähigkeit bzw. des ermittelten pH-Werts von dem jeweiligen Referenzwert ein zu einer Verwendung der Milch (2) zum Zubereiten eines Milchgetränks gehöriger Brühvorgang, insbesondere eine Brühtemperatur und/oder ein Brühdauer betreffend, angepasst wird.

10. Messvorrichtung (1) zum Bestimmen eines Frische-Zustands von Milch (2),
- mit wenigstens einer Sensoreinrichtung (4) zum Messen eines von der elektrischen Leitfähigkeit der Milch (2) und/oder von dem pH-Wert der Milch (2) abhängigen Parameters;
- mit einer Steuerungs-/Regelungseinrichtung (8), welche zum Ermitteln der elektrischen Leitfähigkeit der Milch (2) und/oder des pH-Werts der Milch (2) über den gemessenen Parameter mit der wenigstens einen Sensoreinrichtung (4) zusammenwirkt und zur Durchführung des Verfahrens nach einem der Ansprüche 1 bis 7 eingerichtet/programmiert ist.

11. Messvorrichtung nach Anspruch 10,
**dadurch gekennzeichnet, dass**
- die wenigstens eine Sensoreinrichtung (4) ein kapazitives Sensorelement (4a) zum Messen einer Kapazität in der Milch (2) als Parameter umfasst, und/oder, dass
- die wenigstens eine Sensoreinrichtung (4) ein induktives Sensorelement (4a) zum Messen einer Induktivität in der Milch (2) als Parameter umfasst, und/oder, dass
- die wenigstens eine Sensoreinrichtung (4) ein als Lastwiderstand ausgebildetes Sensorelement (4a) zum Messen eines elektrischen Widerstands in der Milch (2) als Parameter umfasst, und/oder, dass
- die wenigstens eine Sensoreinrichtung (4) ein als pH-Elektrode, insbesondere als ISFET, ausgebildetes Sensorelement (4a) zum Messen einer Spannung oder eines Stroms als Parameter umfasst.

12. Messvorrichtung nach Anspruch 10 oder 11,
**dadurch gekennzeichnet, dass**,
falls im Betrieb der Messvorrichtung (1) die Milch (2) als nicht frisch eingestuft wird, eine Verwendung der Milch (2) durch die Messvorrichtung (1) abgebrochen oder verhindert wird und/oder einem Benutzer die Durchführung eines Programms zum Spülen von milchführenden Komponenten (5) der Messvorrichtung (1) vorgeschlagen wird.

13. Messvorrichtung nach einem der Ansprüche 10 bis 12,
- wobei die Messvorrichtung (1) als Kaffeemaschine (1a) mit einem Behältnis (3) zum Aufnehmen von Milch (2) ausgebildet ist;
- wobei die wenigstens eine Sensoreinrichtung (4) zum Messen des Parameters in einem Milchschlauch der Kaffeemaschine (1a) zum Einleiten von Milch in die Kaffeemaschine (1a) angeordnet ist; und/oder
- die wenigstens eine Sensoreinrichtung (4) in einem Behältnis (3) der Kaffeemaschine (1a) zum Aufnehmen von Milch (2) angeordnet ist; und/oder
- die wenigstens eine Sensoreinrichtung (4) in milchführenden Komponenten (5) der Kaffeemaschine (1a) zum Führen von Milch (1) innerhalb der Kaffeemaschine (1a) angeordnet ist.

14. Messvorrichtung nach einem der Ansprüche 10 bis 12,
- wobei die Messvorrichtung (1) als Kühlschrank (1b) mit einem Behältnis (3) zum Aufnehmen von Milch (2) ausgebildet ist.
- wobei die wenigstens eine Sensoreinrichtung (4) zum Messen des Parameters in einem Behältnis (3) des Kühlschranks (1b) angeordnet ist.

15. Messvorrichtung nach einem der Ansprüche 10 bis 14,
**dadurch gekennzeichnet, dass**
die Messvorrichtung (1) eine mit der Steuerungs-/Regelungseinrichtung (8) zusammenwirkende, bevorzugt zur drahtlosen Datenübertragung ausgebildete, noch bevorzugter zur drahtlosen Datenübertragung via Induktion, Bluetooth oder NFC ausgebildete, Schnittstelle zum Auslesen des Frische-Zustands, des pH-Werts oder auch der elektrischen Leifähigkeit der Milch (2) aufweist.
